(19) **Europäisches Patentamt**
**European Patent Office**
**Office européen des brevets**

(11) **EP 1 774 219 B1**

(12) **FASCICULE DE BREVET EUROPEEN**

(45) Date de publication et mention
de la délivrance du brevet:
**14.05.2008 Bulletin 2008/20**

(51) Int Cl.:
*F21S 8/00* *(2006.01)*     *G05D 25/02* *(2006.01)*
*G01J 1/42* *(2006.01)*     *G02B 27/62* *(2006.01)*

(21) Numéro de dépôt: **05794892.9**

(22) Date de dépôt: **29.07.2005**

(86) Numéro de dépôt international:
**PCT/FR2005/050632**

(87) Numéro de publication internationale:
**WO 2006/021717 (02.03.2006 Gazette 2006/09)**

(54) **SYSTEME DE REGLAGE D'UN SYSTEME D'ECLAIREMENT**

SYSTEM ZUR STEUERUNG EINES BELEUCHTUNGSSYSTEMS

SYSTEM FOR CONTROLLING AN ILLUMINATION SYSTEM

(84) Etats contractants désignés:
**DE GB IT NL**

(30) Priorité: **02.08.2004 FR 0451758**

(43) Date de publication de la demande:
**18.04.2007 Bulletin 2007/16**

(73) Titulaire: **COMMISSARIAT A L'ENERGIE ATOMIQUE**
**75015 Paris (FR)**

(72) Inventeurs:
• **GAULT, François**
**F-33320 EYSINES (FR)**
• **PUIGSEGUR, Ludivine**
**F-33850 Leognan (FR)**

(74) Mandataire: **Poulin, Gérard**
**Brevatome**
**3, rue du Docteur Lancereaux**
**75008 Paris (FR)**

(56) Documents cités:
**EP-A- 0 913 623          EP-A- 0 926 529**
**EP-A- 1 357 329          US-A- 4 641 227**
**US-A- 5 321 439**

• **PATENT ABSTRACTS OF JAPAN vol. 017, no. 425 (P-1587), 6 août 1993 (1993-08-06) -& JP 05 087630 A (IWASAKI ELECTRIC CO LTD), 6 avril 1993 (1993-04-06)**
• **PATENT ABSTRACTS OF JAPAN vol. 2000, no. 07, 29 septembre 2000 (2000-09-29) -& JP 2000 105425 A (MINOLTA CO LTD), 11 avril 2000 (2000-04-11)**

## Description

## DOMAINE TECHNIQUE

L'invention concerne un système de réglage, assisté par ordinateur, d'un système d'éclairement, plus particulièrement d'un simulateur solaire. Elle concerne le système de réglage et un procédé de réglage utilisant le système de réglage.

## ÉTAT DE LA TECHNIQUE ANTÉRIEURE

Un simulateur solaire a pour fonction de fournir un éclairage uniforme d'un objet (une cible) à l'aide d'un faisceau lumineux dont le spectre est sensiblement équivalent à celui du spectre de la lumière émise par le soleil.

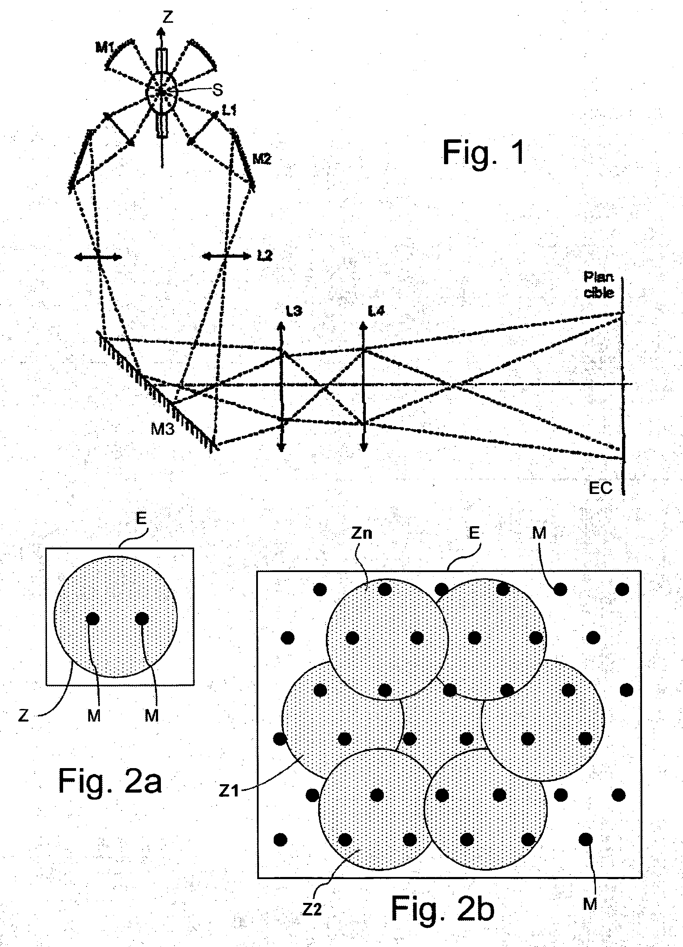

Un simulateur solaire peut être constitué, comme cela est connu, tel que cela est schématisé en figure 1 par les organes suivants:

- un bloc catadioptrique permettant de collecter un maximum du flux lumineux d'une ou plusieurs lampe (s) S (une lampe xénon par exemple) située(s) au milieu du bloc dioptrique. Les voies de collections du flux lumineux sont chacune composées de deux lentilles telles que L1 et L2 et de deux miroirs tels que M1 et M2. Sur la figure 1, on n'a représenté qu'une seule lampe S, mais il peut y en avoir plusieurs. De même, on n'a représenté que deux voies de collection de flux lumineux situées dans le plan de la figure 1 symétriquement par rapport à l'axe Z, mais il peut y en avoir une plus grande quantité. Par exemple, il peut y avoir huit voies de collection de flux lumineux disposées autour de la lampe et réparties à 45° autour de l'axe Z.
- un système optique de regroupement des différents flux lumineux et de transmission permettant de réaliser le transport des flux lumineux ainsi collectés par le bloc catadioptrique pour les superposer vers la cible à éclairer. Ce système optique de regroupement des différents flux lumineux et de transmission du flux est constitué, sur la figure 1, d'un miroir M3 et de deux lentilles ou doublets L3 et L4 permettant d'adapter la dimension de la zone éclairée à la dimension de la cible.

Dans les techniques connues, pour assurer un éclairement homogène d'un plan cible, on mesure, à l'aide d'une sonde de mesure, la répartition d'éclairement en différents points de l'écran E pour tout le spectre solaire.

Le document EP 0 913 623 décrit un simulateur solaire, ainsi qu'une méthode de mesure de répartition d'eclairement.

Ce procédé de mesure par sonde permet de vérifier de manière ponctuelle l'éclairement de certains points de la cible. On réalise ainsi une cartographie de l'éclairement, sur un plan cible, du simulateur à caractériser.

Dans de tels systèmes, le temps de réglage du simulateur solaire dépend du temps de mesure de l'homogénéité.

Typiquement, dans ces systèmes, une mesure d'homogénéité prend entre 30 minutes et une heure. S'il est nécessaire d'itérer plusieurs fois le réglage et la mesure, le réglage d'une lampe solaire peut prendre de la demi journée à deux jours.

Pour des simulations solaires de grands diamètres, on utilise environ 40 lampes, ce qui nécessite environ un mois de maintenance. La durée de vie d'une lampe au xénon étant actuellement d'environ de 500 heures, le fait de consommer 20 heures, par exemple, pour le réglage n'est pas négligeable.

De plus, la méthode de réglage utilisant une sonde de mesure nécessite de positionner le système au niveau du plan cible et de changer la position de la sonde sur chacune des zones de mesure. Ceci conduit à mettre en place un outillage de maintenance dédié pour avoir accès au plan cible.

Le document EP 1357329 décrit un système de réglage d'un système d'éclairement ne possédant qu'un composant optique.

## EXPOSÉ DE L'INVENTION

L'invention concerne un système de réglage d'un système d'éclairement tel qu'un simulateur solaire permettant de résoudre ces inconvénients.

Plus particulièrement, l'invention réside dans un système et dans un procédé permettant de calculer les paramètres optimaux de réglage d'un simulateur solaire dans le but d'assurer un éclairement souhaité, par exemple homogène, d'un plan cible. Le procédé de réglage s'effectue à partir d'une analyse d'image de la tache éclairée sur le plan cible par le simulateur et à partir d'une modélisation exhaustive du système optique d'éclairement. Une méthode d'optimisation est ensuite utilisée pour estimer les paramètres optimaux de réglages.

Le dispositif peut être complété par un spectromètre qui permet de connaître le spectre du simulateur solaire et d'avoir la réponse spectrale du signal exploitable.

Le système selon l'invention permet de limiter significativement la durée des opérations et de s'affranchir du niveau d'expérience de l'opérateur chargé de la maintenance.

De plus, si le système optique d'éclairement est motorisable, c'est-à-dire que les positions des différents composants optiques du système d'éclairement peuvent être réglées par des moteurs, le système de réglage selon l'invention peut rendre automatique la phase de réglage.

L'invention concerne donc un système de réglage d'un système d'éclairement comprenant

- une source optique comportant au moins une source lumineuse,
- un écran en matériau réfléchissant la lumière comportant plusieurs marques dont les dimensions et les positions sont connues,
- un dispositif de traitement, caractérisé en ce que :

la au moins une source lumineuse éclaire différents composants optiques dont des organes de collection de flux lumineux et un dispositif de regroupement des différents flux lumineux et de transmission d'un flux lumineux résultant vers un plan à éclairer, les composants optiques de ce système d'éclairement possédant un nombre déterminé de degrés de liberté,
et en ce que le dispositif de traitement permet d'établir une relation entre la photographie de l'écran et des photographies préenregistrées et calcule des informations de réglages des composants optiques du système d'éclairement selon leurs degrés de liberté respectifs.

La source optique peut comporter plusieurs sources lumineuses éclairant chacune une zone dudit écran. L'écran possède une pluralité de marques réparties de telle façon qu'il y ait au moins deux marques par zone éclairée.

De préférence, les marques sont de forme circulaire et sont uniformément réparties à la surface de l'écran.

Le dispositif de traitement permet de façon logicielle de diviser les images fournies par la caméra en un nombre déterminé de zones d'analyse et permet d'enregistrer les éclairements moyens de ces différentes zones d'analyse pour différentes configurations de réglages déterminées du système d'éclairement avec, associé à ces enregistrements, des caractéristiques de réglage des composants du système d'éclairement relatives auxdits degrés de liberté.

De plus, le dispositif de traitement détecte la position desdites marques dans chaque zone éclairée de l'écran et détermine, à l'aide de la position de ces marques, la dimension et la position de chaque zone éclairée sur l'écran.

Avantageusement, les zones d'analyse sont obtenues en divisant chaque zone éclairée par chaque source en plusieurs couronnes et chaque couronne en plusieurs portions de couronne.

L'écran peut comporter un trou et on peut prévoir un spectromètre situé derrière l'écran de façon à recevoir, à travers ce trou, la lumière émise par la source d'éclairement. La mesure de spectre réalisée par le spectromètre est alors transmise au dispositif de traitement pour réaliser une correction de traitement d'image.

Le système d'éclairement peut comporter des dispositifs de commande électriques permettant d'agir sur les réglages des composants optiques selon leurs degrés de liberté respectifs et ces dispositifs de commande électriques sont commandés par lesdites informations de réglage fournies par le dispositif de traitement.

L'invention concerne également un procédé de caractérisation d'un système d'éclairement permettant un réglage mettant en oeuvre le système de réglage précédent. Ce procédé comporte les étapes suivantes :

- étape 1a: analyse de la répartition spatiale de l'éclairement sur l'écran pour la configuration nominale qui correspond au réglage correct du système d'éclairement,
- étape 1b: analyse de la répartition spatiale de l'éclairement sur l'écran pour différentes configurations dégradées en agissant sur différents degrés de liberté des composants optiques du système d'éclairement indépendamment les uns des autres,
- étape 1c: découpe d'une zone éclairée de l'écran en zones d'analyse en fonction des répartitions d'éclairement obtenues aux étapes 1a et 1b,
- étape 1d: réalisation d'une matrice d'interaction Mint à deux dimensions à partir du nombre de zones d'analyse ainsi défini et du nombre de degrés de liberté des composants optiques du système d'éclairement,
- étape 1e : enregistrement de l'éclairement moyen de chaque zone d'analyse lors de la modification du système par action sur les différents degrés de liberté.

Le procédé de caractérisation du système d'éclairement est préalable au réglage. Lorsque la caractérisation est connue le réglage est effectué par les étapes ci-après.

- étape 1: détermination du centrage d'une zone éclairée par le simulateur solaire par rapport aux marques réalisées sur l'écran,
- étape 2: enregistrement d'un vecteur $V_{défaut}$ caractéristique de cette zone éclairée qui contient les valeurs moyennes des éclairements des différentes zones d'analyse définies lors de l'étape 1c
- étape 3: calcul par une méthode d'optimisation, par exemple de décomposition en valeurs singulières de la matrice de réglage $M_{reg}$ pseudo-inverse de la matrice $M_{int}$,
- étape 4: détermination d'un vecteur de réglage $V_{reg}$, par exemple,

$$V_{reg} = M_{reg} \cdot V_{défaut}$$

qui contient les corrections à apporter pour les différents degrés de liberté des composants optiques du simulateur de solaire.

Le procédé de réglage peut comporter une étape d'affichage des réglages à apporter aux composants du système d'éclairement.

En variante, le procédé de réglage comporte une étape de transmission desdits réglages à apporter aux dispositifs de commande électriques des composants du système d'éclairage.

## BRÈVE DESCRIPTION DES DESSINS

Les différents objets caractéristiques de l'invention apparaîtront plus clairement dans la description qui va suivre et dans les figures annexées qui représentent:

- la figure 1, un exemple de simulateur solaire connu dans la technique,
- les figures 2a et 2b, des exemples d'écrans du système de réglage selon l'invention,
- la figure 3a, un exemple de réalisation général du système selon l'invention,
- la figure 3b, une variante de réalisation du système de la figure 3a,
- la figure 4, des courbes de spectres d'une source solaire et d'un capteur CCD, et
- la figure 5, la découpe d'une zone d'éclairement en zones d'analyse.

## EXPOSÉ DÉTAILLÉ DE MODES DE RÉALISATION PARTICULIERS

On va donc décrire un exemple de réalisation du système selon l'invention.

Le système de l'invention comporte des écrans d'une conception particulière. L'écran destiné au système de réglage d'un systéme d'éclairement comporte une face réfléchissante, caractérisé en ce que cette face réfléchissante comporte des marques (M) de préférence régulièrement réparties. Les écrans sont revêtus d'une couche de peinture blanche résistante au flux lumineux du simulateur solaire (et notamment aux rayonnements UV), ou d'une céramique ou d'un verre dépoli, et ils sont munis desdts dessins ou marques. Ces dessins ou marques sont des motifs réalisés par gravure ou peinture. Leurs formes sont connues du système et ils ont de préférence tous la même forme. Ils sont avantageusement de forme circulaire de diamètre par exemple de quelques dizaines de millimètres selon la taille de l'écran et de la zone éclairée sur l'écran.

Les figures 2a et 2b représentent des écrans conçus dans le cadre de l'invention.

Dans le cas ou le simulateur solaire ne comporte qu'une seule source lumineuse ou lampe, l'éclairement réalisé sur une cible ou un écran a en principe une forme circulaire. La figure 2a représente un écran E nécessaire et suffisant pour permettre dans ce cas le fonctionnement du système de l'invention. Cet écran E comporte au moins deux marques M distinctes l'une de l'autre situées sur l'écran de telle façon que plusieurs d'entre elles soient toujours présentes dans la zone Z éclairée par le simulateur solaire.

Dans le cas ou le simulateur solaire comporte plusieurs sources lumineuses (lampes), les différentes sources éclairent plusieurs zones représentées sur la figure 2b, telles que Z1, Z2, et ainsi de suite jusqu'à Zn, n étant le nombre de zones. L'écran E de la figure 2b comporte un réseau de marques M réparties sur l'écran de telle façon qu'il y ait toujours plusieurs marques dans une zone éclairée. De préférence, ces marques sont réparties régulièrement, mais l'essentiel est surtout que le système de réglage connaisse leurs positions.

Le schéma de répartition de ces marques est calculé en fonction de la répartition d'éclairement des lampes.

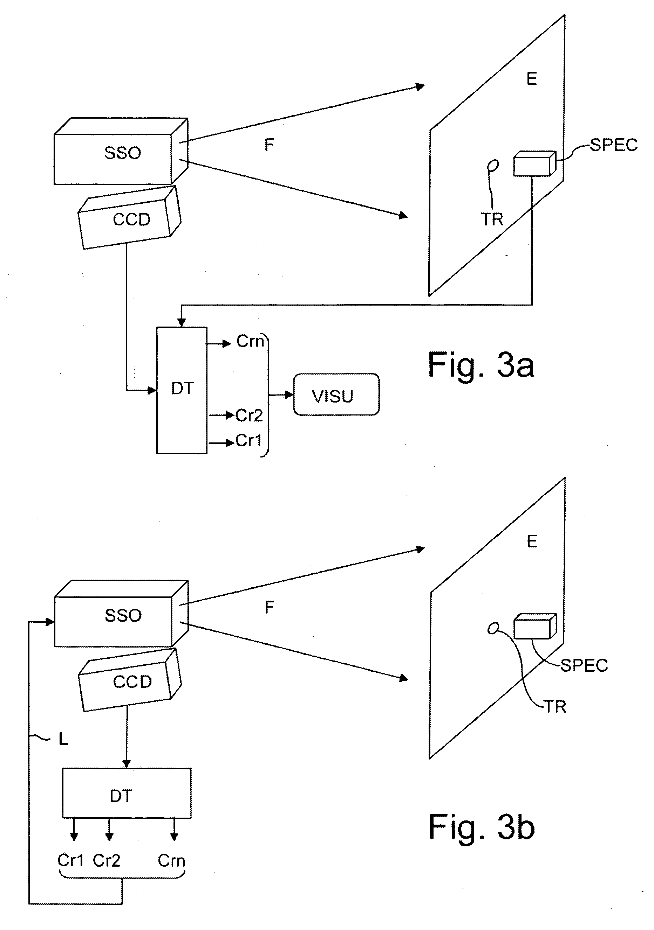

Par ailleurs, le système de l'invention comporte une caméra telle qu'une caméra CCD orientée de façon à photographier l'écran. La figure 3a représente un tel système. Sur cette figure, on trouve le simulateur solaire SSO qui doit faire l'objet d'un réglage. Ce simulateur solaire éclaire la face de l'écran E qui est munie des marques M décrites précédemment en relation avec les figures 2a et 2b. La caméra CCD est orientée vers l'écran E et est située à proximité de l'optique de sortie du simulateur solaire pour éviter que les mesures ne soient faussées par des problèmes de parallaxe.

La distance de la caméra par rapport à l'écran n'est pas importante, mais on essaiera dans la mesure du possible d'optimiser la distance entre l'écran et la caméra de manière à limiter les effets de non uniformité de l'indicatrice de réflectance de l'écran tout en préservant une discrétisation satisfaisante (taille des pixels de la caméra CCD).

De plus, un dispositif de traitement DT connaît les positions des marques M sur l'écran E et recevra les données d'image de l'écran E acquises par la caméra CCD.

On va donc maintenant décrire le traitement, par le dispositif de traitement DT, des informations obtenues à partir de la caméra CCD.

Tout d'abord, il convient que le système ait une bonne connaissance physique du simulateur solaire qui doit faire l'objet d'un réglage. En particulier, il est important de bien identifier les degrés de liberté (rotation, translation) des différents composants optiques du système d'éclairement, ce qui permettra de déterminer les valeurs des paramètres de réglage pour chacun des degrés de liberté des composants optiques.

Cette étude physique du simulateur solaire peut être faite:

- soit par simulation numérique du système optique dans le cas où l'on connaît de manière exhaustive les géométries du système et de ses composants optiques,
- soit, lorsqu'on ne possède pas ces informations sur le système optique, par caractérisation expérimentale du système en modifiant d'une quantité connue chaque degré de liberté indépendamment et en stockant l'ensemble des configurations.

Ensuite, le procédé de l'invention prévoit les différentes étapes suivantes:

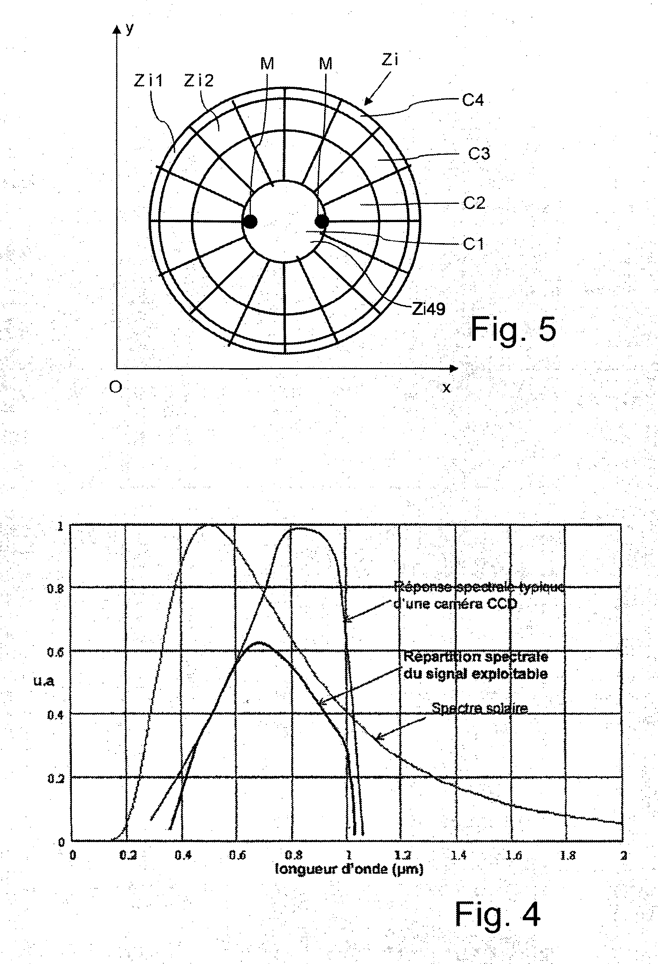

- étape 1a: On analyse la répartition spatiale de l'éclairement sur l'écran E pour la configuration nominale qui correspond à un réglage correct du simulateur solaire. Cette analyse se fait par analyse de l'image de l'écran prise par la caméra CCD et transmise au dispositif de traitement DT. La configuration nominale est en principe celle définie par le fabriquant du simulateur solaire,
- étape 1b: on répète l'opération pour différentes configurations dégradées en agissant sur les différents degrés de liberté des composants optiques du simulateur solaire indépendamment les uns des autres soit par modification des paramètres du modèle, soit par modification d'une quantité connue de chaque degré de liberté sur les composants optiques.
- étape 1c: on procède à une analyse paramétrique, c'est-à-dire que l'on identifie pour chaque zone éclairée Zi (i est compris entre 1 et n) des zones d'analyse telles que Zi1 et Zi2 représentées sur la figure 5, en fonction des répartitions d'éclairement obtenues. Par exemple, la figure 5 représente l'image d'une zone Zi éclairée par un simulateur solaire sur laquelle on a déterminé un nombre p de zones d'analyse. Ces zones d'analyse ont été, dans cet exemple de réalisation, déterminées pour un simulateur solaire déterminé pour lequel on a déterminé que l'on pouvait décomposer la zone Zi en une partie centrale C1 et trois couronnes C2, C3, C4, l'ensemble étant découpé en 16 quartiers, soit 49 zones d'analyse telles que Zi1 et Zi2 et ainsi de suite jusqu'à Zi49. A ces 49 zones d'analyse, il convient d'ajouter deux contraintes supplémentaires qui correspondent aux positions de la zone Zi sur l'écran selon les axes Ox et Oy et qui sont déterminées à partir des marques M de l'écran définies précédemment.

Par ailleurs, on connaît le nombre de degrés de liberté du système. Par exemple, pour le simulateur solaire de la figure 1, on a:

- trois degrés de liberté pour la lampe,
- deux degrés de liberté pour chaque miroir M1, M2, M3,
- un degré de liberté pour chaque lentille L3 et L4, etc.

A l'issue de cette étape 3, on dispose donc d'une matrice d'interaction $M_{int}$ à deux dimensions:

- le nombre de zones d'analyse ainsi défini,
- le nombre de degrés de liberté des composants optiques du simulateur solaire

Cette matrice permet de modéliser le système au premier ordre.

- étape 1d : on procède à une étude paramétrique qui permet de relier l'évolution de l'éclairement moyen de chaque zone d'analyse lors de la modification du système par action sur les différents degrés de liberté.

Cela revient à enregistrer dans le dispositif de traitement, pour différents réglages du simulateur solaire, les éclairements moyens mesurés dans chaque zone d'analyse.

Le système est maintenant prêt pour permettre un réglage du simulateur solaire. Ce réglage sera par exemple nécessaire après le changement d'une lampe. Ce réglage est déterminé par le dispositif de traitement DT au cours des étapes suivantes:

- étape 1: on détermine le centrage de chaque zone éclairée (Z1, Z2, Zi, Zn) par le simulateur solaire par rapport aux positions connues des différentes marques M réalisées sur l'écran. L'image de l'écran fournie par la caméra CCD permet par traitement d'image d'isoler chaque zone éclairée (Z1 - Zn) par les différentes lampes. Le dispositif de traitement connaît la position des différentes marques M de l'écran et la position que devrait avoir chaque zone éclairée (Z1 - Zn) sur l'écran. Cela permet de connaître la dimension d'une tache éclairée et donc son écart de dimension par rapport à la dimension de la tache nominale correspondante, ainsi que l'écart de position par rapport à la position de la tache nominale.
- étape 2: À partir de l'image d'une zone éclairée fournie par la caméra CCD, on extrait un vecteur $V_{défaut}$ caractéristique de cette zone éclairée qui contient la valeur moyenne de l'éclairement des différentes zones d'analyse (Zi1 à Zip) telles que définie lors de l'étape 1c précédente. Selon l'exemple donné dans l'étape 1c, ce vecteur comporte donc 51 valeurs (49 valeurs pour les zones d'analyse et 2 valeurs pour la position de la zone éclairée).
- étape 3: On calcule par une méthode de décomposition en valeurs singulières, la matrice de réglage $M_{reg}$ pseudo-inverse de la matrice $M_{int}$.
- étape 4: On détermine le vecteur $V_{reg}$

$$V_{reg} = M_{reg} \cdot V_{défaut}$$

qui contient les réglages à apporter pour les différents degrés de liberté des composants optiques du simulateur solaire.

Les résultats contenus dans le vecteur $V_{reg}$ permettent d'agir en conséquence sur les composants optiques pour obtenir un c correct du simulateur solaire.

Selon le système représenté en figure 3a, ces réglages à apporter sont communiquées à un dispositif de visualisation VISU à l'intention d'un opérateur qui peut ainsi en prendre connaissance pour apporter les réglages nécessaires.

Selon le système de la figure 3b, on peut également prévoir que les composants optiques du simulateur solaire sont munis de moyens électriques permettant de modifier leurs positions selon leurs degrés de liberté respectifs. Dans ce cas, les informations contenues dans le vecteur de réglage sont transmises au simulateur solaire par une liaison L, par exemple un bus, et permettent d'agir directement et automatiquement sur ces moyens électriques. On dispose alors d'un système de réglage entièrement automatique du simulateur solaire.

Par ailleurs du point de vue matériel, un mode de réalisation de l'invention prévoit en outre un spectromètre qui servira lorsqu'on ne connaîtra pas la répartition spectrale du simulateur solaire. On prévoit un trou TR dans l'écran (figure3a) et on place un spectromètre SPEC derrière l'écran pour qu'il reçoive par le trou TR de la lumière émise par le simulateur solaire. Le spectromètre analyse la répartition spectrale de la lumière au centre de la tache solaire. Cette information permet d'optimiser le traitement de l'image en affectant un poids réel aux longueurs d'onde plutôt que d'utiliser une réponse standard de la source lumineuse et de l'optique du simulateur solaire.

Les répartitions spectrales typiques d'un simulateur solaire et d'une caméra CCD silicium sont données sur la figure 4. Le système optique du simulateur pouvant être chromatique, c'est-à-dire que la répartition d'éclairement pouvant dépendre de la longueur d'onde, ces données spectrales peuvent être importantes dans le cadre du traitement d'image.

## Revendications

1. Système de réglage d'un système d'éclairement (SSO) comprenant

- une source optique comportant au moins une source lumineuse (S),
- un écran (E) en matériau réfléchissant la lumière comportant plusieurs marques (M) dont les dimensions et les positions sont connues,

un dispositif de traitement (DT) **caractérisé en ce que**:

la au moins une source lumineuse éclaire différents composants optiques dont des organes de collection de flux lumineux (L1, L2, M1, M2) et un dispositif (M3, L3, L4) de regroupement des différents flux lumineux et de transmission d'un flux lumineux résultant vers un plan à éclairer, les composants optiques de ce système d'éclairement possédant un nombre déterminé de degrés de liberté, et **en ce que** le dispositif de traitement (DT) permet d'établir une relation entre la photographie de l'écran (E) et des photographies préenregistrées et calcule des informations de réglages des composants optiques du système d'éclairement selon leurs degrés de liberté respectifs.

2. Système de réglage d'un système d'éclairement selon la revendication 1, **caractérisé en ce que** la source optique comporte plusieurs sources lumineuses éclairant chacune une zone (Z1-Zn) dudit écran (E), ledit écran (E) possédant une pluralité de marques (M) réparties de telle façon qu'il y ait au moins deux marques (M) par zone éclairée.

3. Système de réglage d'un système d'éclairement selon la revendication 2, **caractérisé en ce que** lesdites marques (M) sont de forme circulaire.

4. Système de réglage d'un système d'éclairement selon la revendication 1, **caractérisé en ce que** les marques (M) sont uniformément réparties à la surface de l'écran.

5. Système de réglage d'un système d'éclairement selon la revendication 1, **caractérisé en ce que** le dispositif de traitement permet de diviser les images fournies par une caméra (CCD) en un nombre déterminé de zones d'analyse (Zi1, Zi49, Zip) et permet d'enregistrer les éclairements moyens de ces différentes zones d'analyse (Zi1, Zi49, Zip) pour différentes configurations de réglages déterminées du système d'éclairement avec associé à ces enregistrements des caractéristiques de réglage des composants optiques du système d'éclairement relatives auxdits degrés de liberté.

6. Système de réglage d'un système d'éclairement selon la revendication 1, **caractérisé en ce que** le dispositif de traitement (DT) détecte la position desdites marques (M) dans chaque zone éclairée (Z1-Zn) de l'écran et détermine à l'aide de la position de ces marques (M), la dimension et la position de chaque zone éclairée (Z1-Zn) sur l'écran (E).

7. Système de réglage d'un système d'éclairement selon la revendication 6 et 5, **caractérisé en ce que** les zones d'analyse sont obtenues en divisant chaque zone éclairée (Z1-Zn) par chaque source en plusieurs couronnes (C2, C3, C4) et chaque couronne (C2, C3, C4) en plusieurs portions (Zi1, Zi2, Zi48) de couronne.

8. Système de réglage d'un système d'éclairement selon la revendication 1, **caractérisé en ce que** l'écran (E) comporte un trou (TR) et **en ce que** le système comporte un spectromètre (SPEC) situé derrière l'écran (E) de façon à recevoir, à travers ce trou, la lumière émise par la source d'éclairement, la mesure de spectre réalisée par le spectromètre (SPEC) étant transmise au dispositif de traitement (DT) pour réaliser une correction de traitement d'image.

9. Système de réglage d'un système d'éclairement selon la revendication 1, **caractérisé en ce que** le système d'éclairement comporte des dispositifs de commande électriques permettant d'agir sur les réglages des composants optiques selon leurs degrés de liberté respectifs et **en ce que** ces dispositifs de commande électriques sont commandés par lesdites informations de réglage fournies par le dispositif de traitement (DT).

10. Procédé de caractérisation d'un système d'éclairement préalable à un réglage mettant en oeuvre le système de réglage selon l'une quelconque des revendications précédentes, **caractérisé en ce qu'**il comporte les étapes suivantes:

> étape 1a: analyse de la répartition spatiale de l'éclairement sur l'écran (E) pour la configuration nominale qui correspond au réglage correct du système d'eclairement.
> étape 1b: analyse de la répartition spatiale de l'éclairement sur l'écran (E) pour différentes configurations dégradées en agissant sur différents degrés de liberté des composants optiques du système d'eclairement indépendamment les uns des autres,
> étape 1c: découpe d'une zone éclairée de l'écran en zones d'analyse (Zi1, Zi2, Zip) en fonction des répartitions d'éclairement obtenues aux étapes 1a et 1b,
> étape 1d: réalisation d'une matrice d'interaction $M_{int}$ à deux dimensions à partir du nombre de zones d'analyse ainsi défini et du nombre de degrés de liberté des composants optiques du système d'éclairement.
> étape 1e : enregistrement de l'éclairement moyen de chaque zone d'analyse (Zi1, Zi2, Zip) lors de la modification du système par action sur les différents degrés de liberté.

11. Procédé de réglage d'un système préalablement **caractérisé par** le procédé selon la revendication 10, **caractérisé en ce qu'**il comporte les étapes suivantes pour régler un système d'éclairement:

> étape 1: détermination du centrage d'une zone éclairée (Z1 Zn) par le système d'éclairement par rapport à des marques (M) réalisées sur l'écran et dont la position de chacune est connue,
> étape 2: enregistrement d'un vecteur $V_{défaut}$ caractéristique de cette zone éclairée qui contient les valeurs moyennes des éclairements des différentes zones d'analyse (Zi1, Zi49, Zip) définies lors de l'étape 1c
> étape 3: calcul par une méthode de décomposition en valeurs singulières d'une matrice de réglage $M_{reg}$ pseudo-inverse de la matrice $M_{int}$,

étape 4: détermination d'un vecteur $V_{reg}$

$$V_{reg} = M_{reg}.V_{défaut}$$

qui contient les corrections à apporter pour les différents degrés de liberté des composants optiques du système d'éclairement.

12. Procédé de réglage selon la revendication 11, **caractérisé en ce qu'**il comporte une étape d'affichage des réglages à apporter aux composants du système d'éclairement.

13. Procédé de réglage selon la revendication 11, **caractérisé en ce qu'**il comporte une étape de transmission desdits réglages à apporter aux dispositifs de commande électriques des composants optiques du système d'éclairement.

## Claims

1. System for adjusting an illumination system (SSO) comprising

> - an optical source comprising at least one light source (S);
> - a screen (E) made of light-reflecting material comprising several marks (M) the dimensions and positions of which are known;

a processing device (DT);
**characterised in that**:

> the at least one light source illuminates various optical components including light flux collection members (L1, L2, M1, M2) and a device (M3, L3, L4) for grouping together the different light fluxes and transmitting a resulting light flux towards a plane to be illuminated, the optical components of this illumination system having a given number of degrees of freedom,
> and **in that** the processing device (DT) makes it possible to establish a relationship between the photograph of the screen (E) and prerecorded photographs and calculates information for adjusting the optical components of the illumination system according to their respective degrees of freedom.

2. Illumination system adjustment system according to Claim 1, **characterised in that** the optical source comprises several light sources each illuminating an area (Z1-Zn) of said screen (E), said screen (E) having a plurality of marks (M) distributed so that there are at least two marks (M) per illuminated area.

**3.** Illumination system adjustment system according to Claim 2, **characterised in that** said marks (M) are circular in shape.

**4.** Illumination system adjustment system according to Claim 1, **characterised in that** the marks (M) are uniformly distributed on the surface of the screen.

**5.** Illumination system adjustment system according to Claim 1, **characterised in that** the processing device makes it possible to divide the images supplied by a camera (CCD) into a given number of analysis areas (Zi1, Zi49, Zip) and makes it possible to record the mean illuminations of these different analysis areas (Zi1, Zi49, Zip) for different given configurations of adjustments of the illumination system with, associated with these recordings, adjustment characteristics of the optical components of the illumination system relating to said degrees of freedom.

**6.** Illumination system adjustment system according to Claim 1, **characterised in that** the processing device (DT) detects the position of said marks (M) in each illuminated area (Z1-Zn) of the screen and determines, by means of the position of these marks (M), the size and position of each illuminated area (Z1-Zn) on the screen (E).

**7.** Illumination system adjustment system according to Claims 6 and 5, **characterised in that** the analysis areas are obtained by dividing each area (Z1-Zn) illuminated by each source into several rings (C2, C3, C4) and each ring (C2, C3, C4) into several portions (Zi1, Zi2, Zi48) of ring.

**8.** Illumination system adjustment system according to Claim 1, **characterised in that** the screen (E) comprises a hole (TR) and **in that** the system comprises a spectrometer (SPEC) situated behind the screen (E) so as to receive, through this hole, the light emitted by the illumination source, the spectrum measurement made by the spectrometer (SPEC) being transmitted to the processing device (DT) in order to carry out an image processing correction.

**9.** Illumination system adjustment system according to Claim 1, **characterised in that** the illumination system comprises electrical control devices making it possible to act on the adjustments of the optical components according to their respective degrees of freedom, and **in that** these electrical control devices are controlled by said adjustment information supplied by the processing device (DT).

**10.** Method of characterising an illumination system prior to an adjustment using the adjustment system according to any one of the preceding claims, **characterised in that** it comprises the following steps:

Step 1a: analysis of the spatial distribution of the illumination on the screen (E) for the nominal configuration that corresponds to the correct adjustment of the illumination system;
Step 1b: analysis of the spatial distribution of the illumination on the screen (E) for different degraded configurations by acting on different degrees of freedom of the optical components of the illumination system independently of one another;
Step 1c: partitioning of an illuminated area of the screen into analysis areas (Zi1, Zi2, Zip) according to the illumination distributions obtained at steps 1a and 1b;
Step 1d: production of a two-dimensional interaction matrix $M_{int}$ from the number of analysis areas thus defined and the number of degrees of freedom of the optical components of the illumination system;
Step 1e: recording of the mean illumination of each analysis area (Zi1, Zi2, Zip) during the modification of the system by action on the different degrees of freedom.

**11.** Method of adjusting a system previously **characterised by** the method according to Claim 10, **characterised in that** it comprises the following steps for adjusting an illumination system:

Step 1: determining the centring of an area (Z1 Zn) illuminated by the illumination system with respect to marks (M) made on the screen and whereof the position of each is known;
Step 2: recording a characteristic vector $V_{default}$ for this illuminated area which contains the mean values of the illuminations of the different analysis areas (Zi1, Zi49, Zip) defined during step 1c;
Step 3: calculating, by a method of decomposition into singular values, an adjustment matrix $M_{adj}$ that is the pseudo-inverse of the matrix $M_{int}$;
Step 4: determining a vector $V_{adj}$

$$V_{adj} = M_{adj} \cdot V_{default}$$

that contains the corrections to be made for the different degrees of freedom of the optical components of the illumination system.

**12.** Adjustment method according to Claim 11, **characterised in that** it comprises a step of displaying the adjustments to be made to the components of the illumination system.

**13.** Adjustment method according to Claim 11, **characterised in that** it comprises a step of transmitting said adjustments to be made to the electrical control devices for the optical components of the illumination system.

**Patentansprüche**

1. System zur Steuerung eines Beleuchtungssystems (SSO), umfassend

   - eine mindestens eine Lichtquelle umfassende optische Quelle,
   - einen Schirm (E) aus lichtreflektierendem Material, mehrere Marken (M) umfassend, deren Dimensionen und Positionen bekannt sind,
   - eine Verarbeitungsvorrichtung (DT)

   **dadurch gekennzeichnet:**

   **dass** die mindestens eine Lichtquelle verschiedene optische Baukomponenten beleuchtet, darunter Lichtflusssammelorgane (L1, L2, M1, M2) und eine Vorrichtung (M3, L3, L4) zur Zusammenfassung der verschiedenen Lichtflüsse und zur Übertragung eines resultierenden Lichtflusses auf eine zu beleuchtende Ebene, wobei die optischen Baukomponenten dieses Beleuchtungssystems eine bestimmte Anzahl von Freiheitsgraden besitzen,
   und **dadurch**, dass die Verarbeitungsvorrichtung (DT) ermöglicht, eine Relation zwischen der Photographie des Schirms (E) und vorher aufgezeichneten Photographien herzustellen, und Informationen zur Steuerung der optischen Baukomponenten des Beleuchtungssystems entsprechend ihren jeweiligen Freiheitsgraden berechnet.

2. System zur Steuerung eines Beleuchtungssystems nach Anspruch 1, **dadurch gekennzeichnet, dass** die optische Quelle mehrere Lichtquellen umfasst, von denen jede eine Zone (Z1-Zn) des genannten Schirms (E) beleuchtet, wobei dieser Schirm (E) eine Vielzahl von Marken (M) besitzt, die so verteilt sind, dass es pro beleuchtete Zone mindestens zwei Marken (M) gibt.

3. System zur Steuerung eines Beleuchtungssystems nach Anspruch 2, **dadurch gekennzeichnet, dass** die genannten Marken (M) von kreisrunder Form sind.

4. System zur Steuerung eines Beleuchtungssystems nach Anspruch 1, **dadurch gekennzeichnet, dass** die Marken (M) gleichmäßig auf der Oberfläche des Schirms verteilt sind.

5. System zur Steuerung eines Beleuchtungssystems nach Anspruch 1, **dadurch gekennzeichnet, dass** die Verarbeitungsvorrichtung ermöglicht, die durch eine Kamera (CCD) gelieferten Bilder in eine bestimmte Anzahl Analysezonen (Zi1, Zi49, Zip) zu unterteilen, und ermöglicht, die mittleren Beleuchtungen dieser verschiedenen Analysezonen (Zi1, Zi49, Zip) für verschiedene Konfigurationen bestimmter Steuerungen des Beleuchtungssystems aufzuzeichnen, mit - verknüpft mit diesen Aufzeichnungen - die genannten Freiheitsgrade betreffenden Steuerungscharakteristika der optischen Baukomponenten des Beleuchtungssystems.

6. System zur Steuerung eines Beleuchtungssystems nach Anspruch 1, **dadurch gekennzeichnet, dass** die Verarbeitungsvorrichtung (DT) die Position der genannten Marken (M) in jeder beleuchteten Zone (Z1-Zn) des Schirms detektiert und mit Hilfe der Position dieser Marken (M) die Dimension und die Position jeder beleuchteten Zone (Z1-Zn) auf dem Schirm (E) bestimmt.

7. System zur Steuerung eines Beleuchtungssystems nach Anspruch 6 und 5, **dadurch gekennzeichnet, dass** man die Analysezonen erhält, indem man jede beleuchtete Zone (Z1-Zn) durch jede Quelle in mehrere Kränze (C2, C3, C4) unterteilt und jeden Kranz (C2, C3, C4) in mehrere Kranzstücke (Zi1, Zi2, Zi48).

8. System zur Steuerung eines Beleuchtungssystems nach Anspruch 1, **dadurch gekennzeichnet, dass** der Schirm (E) ein Loch (TR) umfasst, und **dadurch**, dass das System ein Spektrometer (SPEC) umfasst, das so hinter dem Schirm (E) angeordnet ist, dass es durch dieses Loch das von der Beleuchtungsquelle abgestrahlte Licht auffängt, wobei die durch das Spektrometer (SPEC) realisierte Spektrumsmessung zu der Verarbeitungsvorrichtung (DT) übertragen wird, um eine Bildverarbeitungskorrektur zu realisieren.

9. System zur Steuerung eines Beleuchtungssystems nach Anspruch 1, **dadurch gekennzeichnet, dass** das Beleuchtungssystem elektrische Steuervorrichtungen umfasst, die ermöglichen, auf die Steuerungen der optischen Baukomponenten entsprechend ihren jeweiligen Freiheitsgraden einzuwirken, und **dadurch**, dass diese elektrischen Steuervorrichtungen durch die genannten, von der Verarbeitungsvorrichtung (DT) gelieferten Informationen gesteuert werden.

10. Verfahren zur Charakterisierung eines Beleuchtungssystems vor einer Steuerung, welches das erfindungsgemäße Steuerungssystem nach einem der vorangehenden Ansprüche anwendet, **dadurch gekennzeichnet, dass** es die folgenden Schritte umfasst:

Schritt 1a: Analyse der räumlichen Verteilung der Beleuchtung auf einem Schirm (E) für die Nennkonfiguration, die der korrekten Steuerung des Beleuchtungssystems entspricht;

Schritt 1b: Analyse der räumlichen Verteilung der Beleuchtung auf einem Schirm (E) für verschiedene abgestufte Konfigurationen, indem man auf verschiedene Freiheitsgrade der optischen Komponenten des Beleuchtungssystems unabhängig voneinander einwirkt;

Schritt 1c: Zerschneiden bzw. Einteilen einer beleuchteten Zone des Schirms in Analysezonen (Zi1, Zi2, Zip) in Abhängigkeit von den in den Schritten 1a und 1b erhaltenen Beleuchtungsverteilungen;

Schritt 1d: Realisierung einer zweidimensionalen Interaktionsmatrix $M_{int}$ aufgrund der Anzahl so definierter Analysezonen und der Anzahl Freiheitsgrade der optischen Komponenten des Beleuchtungssystems;

Schritt 1e: Aufzeichnung der mittleren Beleuchtung jeder Analysezone (Zi1, Zi2, Zip) bei der Modifikation des Systems durch Einwirkung auf die verschiedenen Freiheitsgrade.

11. Verfahren zur Steuerung eines vorher durch das Verfahren nach Anspruch 10 charakterisierten Systems, **dadurch gekennzeichnet, dass** es zur Steuerung eines Beleuchtungssystems die folgenden Schritte umfasst:

Schritt 1: Determination der Zentrierung einer durch das Beleuchtungssystem beleuchteten Zone (Z1 Zn) im Verhältnis zu auf dem Bildschirm realisierten Marken (M), deren Positionen alle bekannt sind;

Schritt 2: Aufzeichnung eines charakteristischen Vektors $V_{défaut}$ dieser beleuchteten Zone, der die Mittelwerte der Beleuchtungen der verschiedenen während des Schritts 1c definierten Analysezonen (Zi1, Z49, Zip) enthält;

Schritt 3: Berechnung - durch eine Einzelwertezerlegungsmethode - einer zu der Matrix $M_{int}$ pseudo-inversen Steuerungsmatrix $M_{reg}$;

Schritt 4: Determination eines Vektors $V_{reg}$

$$V_{reg} = M_{reg}.V_{défaut}$$

der die vorzunehmenden Korrekturen für die verschiedenen Freiheitsgrade der optischen Komponenten des Beleuchtungssystems enthält.

12. Steuerungsverfahren nach Anspruch 11, **dadurch gekennzeichnet**, das es einen Anzeigeschritt der bei den Komponenten des Beleuchtungssystems vorzunehmenden Steuerungen umfasst.

13. Steuerungsverfahren nach Anspruch 11, **dadurch gekennzeichnet**, das es einen Schritt zur Übertragung der genannten vorzunehmenden Steuerungen zu den elektrischen Steuervorrichtungen der optischen Komponenten des Beleuchtungssystems umfasst.

Fig. 1

Fig. 2a

Fig. 2b

Fig. 3a

Fig. 3b

Fig. 5

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0913623 A
- EP 1357329 A